# EUROPÄISCHE PATENTSCHRIFT

(11) **EP 3 899 682 B1**
(45) Veröffentlichungstag und Bekanntmachung des Hinweises auf die Patenterteilung: **05.04.2023**
(21) Anmeldenummer: 19848771.2
(22) Anmeldetag: 13.12.2019
(51) Int. Cl.: G05D 1/02, B60W 30/16, G06N 3/02, G05D 1/00

(54) **ÜBERWACHUNG VON AUF NEURONALEN NETZWERKEN BASIERTEN FAHRFUNKTIONEN**
MONITORING OF NEURAL-NETWORK-BASED DRIVING FUNCTIONS
SURVEILLANCE DE FONCTIONS DE CONDUITE BASÉE SUR LES RÉSEAUX NEURONAUX

(30) Priorität: 21.12.2018 DE 102018222720
(43) Veröffentlichungstag der Anmeldung: 27.10.2021
(73) Patentinhaber: Continental Autonomous Mobility Germany GmbH, 85057 Ingolstadt (DE)
(72) Erfinder: FEIFEL, Harald, 90411 Nürnberg (DE); WAGNER, Michael, 90411 Nürnberg (DE); SCHRÄBLER, Sighard, 90411 Nürnberg (DE)
(74) Vertreter: Continental Corporation
(86) Internationale Anmeldenummer: PCT/DE2019/200146
(87) Internationale Veröffentlichungsnummer: WO 2020/125875

(56) Entgegenhaltungen:
- WO-A2-2017/155598
- US-A1- 2018 275 657

## Beschreibung

### Technisches Gebiet

Die Erfindung betrifft ein Steuerungssystem zur Steuerung eines autonomen oder automatisierten Fahrzeugs, sowie ein Verfahren und ein Computerprogramm.

### Hintergrund der Erfindung

Bei der Steuerung von autonomen oder automatisierten Fahrzeugen wird die Erkennung einer Fahrsituation zunehmend von einer künstlichen Intelligenz übernommen. Ebenso erfolgt damit die Entscheidung, ob und mit welcher Aktion auf die Fahrsituation reagiert werden soll, auf der Basis von Entscheidungen einer künstlichen Intelligenz. Zu diesem Zweck werden oft neuronale Netzwerke verwendet, die anhand von Daten echter Fahrsituationen mit der zugehörigen zu treffenden Entscheidung trainiert werden. Ein Nachteil der Verwendung künstlicher Intelligenzen im Straßenverkehr ist jedoch die nicht vorhandene oder nur schlechte Möglichkeit, eine getroffene Entscheidung der künstlichen Intelligenz nachzuvollziehen. Diese stellt ein nicht-deterministisches System dar, bei dem nicht mit Sicherheit anhand der Eingangsdaten festgelegt werden kann, welche Entscheidung getroffen wird. Im Fehlerfall, insbesondere wenn das automatisch gesteuerte Fahrzeug in einen Unfall verwickelt wird, ist somit eine Rekonstruktion des Unfallherganges sowie eines möglichen Fehlverhaltens des autonomen oder automatisierten Fahrzeugs nicht möglich. Dies hat rechtliche Konsequenzen, da insbesondere bei schweren Unfällen in Hinsicht auf Haftung und Gewährleistung die Schuldfrage eindeutig geklärt werden muss.

Im Stand der Technik nennt die Offenlegungsschrift US 2018275657A1 ein Deep-Learning-basiertes autonomes Fahrzeugsteuerungssystem, welches eine autonome Fahrsteuerung basierend auf Deep-Learning- Verfahren (künstliche Intelligenz) bestimmt. Ein Fehler bei der Bestimmung der Deep-Learning-basierten autonomen Fahrsteuerung wird anhand einer vorbestimmten Expertenregel korrigiert.

Die Schrift WO2017155598A2 offenbart ein Sicherheitsarchitektursystem mit einer primären Einheit, die primäre Daten zum Ausführen einer normalen Systemfunktionalität erzeugt. Zudem ist eine Sekundäreinheit vorgesehen, die Sekundärdaten zum Ausführen einer alternativen Systemfunktionen erzeugt. Eine Entscheidungslogik entscheidet zwischen den Steuerbefehlen von primärer und sekundärer Einheit basierend auf einer Bestimmung der Gültigkeiten von Primär- und Sekundärdaten.

### Zusammenfassung der Erfindung

Es ist daher eine Aufgabe der Erfindung, ein verbessertes Steuerungssystem zur Steuerung eines autonomen oder automatisierten Fahrzeugs anzugeben.

Die Aufgabe wird durch die Gegenstände der unabhängigen Ansprüche gelöst. Vorteilhafte Ausführungsformen sind Gegenstand der abhängigen Ansprüche, der folgenden Beschreibung, sowie der Figuren.

Die beschriebenen Ausführungsformen gelten gleichermaßen für das Steuerungssystem zur Steuerung einer Bremse, einer Lenkung und/oder eines Antriebs eines autonomen oder automatisierten Fahrzeugs, für das Verfahren zur Steuerung einer Bremse, einer Lenkung und/oder eines Antriebs eines autonomen oder automatisierten Fahrzeugs, für das Computerprogramm und für das computerlesbare Medium. Synergetische Effekte können aus verschiedenen Kombinationen der Ausführungsformen entstehen, auch wenn sie nicht im Detail beschrieben sind.

Weiterhin soll darauf hingewiesen werden, dass alle ein Verfahren betreffende Ausführungsformen der vorliegenden Erfindung in der beschriebenen Reihenfolge der Schritte ausgeführt werden können. Trotzdem muss das nicht die einzigmögliche und erforderliche Reihenfolge der Schritte des Verfahrens sein. Die hierin beschriebenen Verfahren können in einer anderen Reihenfolge der offenbarten Schritte ausgeführt werden, ohne von der entsprechenden Ausführungsform des Verfahrens abzuweichen, sofern nicht nachfolgend ausdrücklich das Gegenteil erwähnt wird.

Gemäß einem ersten Aspekt der Erfindung ist ein Steuerungssystem zur Steuerung einer Bremse, einer Lenkung und/oder eines Antriebs eines autonomen oder automatisierten Fahrzeugs angegeben. Dabei weist das Steuerungssystem eine Erfassungsvorrichtung auf, die dazu ausgeführt ist, ein Objekt aus einer Umgebung des Fahrzeugs zu erfassen und entsprechende Objektdaten bereitzustellen. Weiterhin weist das Steuerungssystem ein künstliches Intelligenz-Modul auf, das dazu ausgeführt ist, aus den Objektdaten zumindest einen ersten Steuerungsbefehl für das Fahrzeug zu erzeugen, sowie eine Rückfallvorrichtung, die dazu ausgeführt ist, aus den Objektdaten mithilfe einer deterministischen Berechnungsvorschrift zumindest einen zweiten Steuerungsbefehl für das Fahrzeug zu erzeugen. Ferner weist das Steuerungssystem eine Sicherheitsvorrichtung auf, die dazu ausgeführt ist, basierend auf den Objektdaten Berechnungswerte zu ermitteln und daraus einen Kritikalitätswert zu berechnen, sowie ein Sicherheitsgate, das dazu ausgeführt ist, den ersten Steuerungsbefehl des künstlichen Intelligenz-Moduls, den zweiten Steuerungsbefehl der Rückfallvorrichtung und den Kritikalitätswert der Sicherheitsvorrichtung zu empfangen. Weiterhin ist das Sicherheitsgate dazu ausgeführt, basierend auf dem Kritikalitätswert, einen dritten Steuerungsbefehl an das Fahrzeug zu versenden, wobei der dritte Steuerungsbefehl entweder der erste Steuerungsbefehl des künstlichen Intelligenz-Moduls oder der zweite Steuerungsbefehl der Rückfallvorrichtung ist beziehungsweise diesem entspricht.

Es werden also bei einem erfindungsgemäßen Steuerungssystem für ein autonomes oder automatisiertes Fahrzeug die Objektdaten, die von Sensoren zur Überwachung der Umgebung des Fahrzeugs gewonnen werden, an wenigstens drei Untereinheiten weitergegeben. Die erste Untereinheit ist eine Einheit zur automatisierten Steuerung des Fahrzeugs. Sie analysiert die Objektdaten und trifft ihre Entscheidungen bezüglich der zu veranlassenden Fahraktionen basierend auf einer künstlichen Intelligenz. Die zweite Untereinheit ist ebenfalls eine Einheit zur automatisierten Steuerung des Fahrzeugs, allerdings beruhen die von ihr veranlassten Fahraktionen auf einem deterministisch programmierten Algorithmus, bei dem genau vorgegeben ist, bei welchen Eingangswerten welche Ausgangswerte ausgegeben werden sollen. Die dritte Untereinheit analysiert ebenfalls die Objektdaten, allerdings nur in Hinsicht auf einfach zu erlangende Berechnungswerte. Aus diesen Berechnungswerten wird ein Kritikalitätswert berechnet, der ein Maß für eine Unfallwahrscheinlichkeit der aktuellen Fahrsituation angibt. Die jeweiligen Ausgangswerte der drei Untereinheiten, also insbesondere der erste sowie der zweite Steuerungsbefehl für Bremse, Lenkung und/oder Antrieb des Fahrzeuges der ersten beziehungsweise der zweiten Untereinheit, sowie der Kritikalitätswert der dritten Untereinheit, werden an ein Sicherheitsgate übergeben. Das Sicherheitsgate verarbeitet die erhaltenen Informationen und gibt einen dritten Steuerungsbefehl an das Fahrzeug weiter. Dieser dritte Steuerungsbefehl kann vorzugsweise auf dem ersten Steuerungsbefehl oder auf dem zweiten Steuerungsbefehl basieren beziehungsweise diesen entsprechen. Das Sicherheitsgate dient der Überwachung des ersten Steuerungsbefehls der auf einer künstlichen Intelligenz basierenden Untereinheit, und stellt sicher, dass bei einer offensichtlichen Fehleinschätzung der Fahrsituation durch die künstliche Intelligenz die Steuerung des Fahrzeugs von einem deterministisch programmierten Algorithmus übernommen wird. Dadurch wird sichergestellt, dass im Fall eines Unfalls der Unfallhergang rekonstruiert werden kann. In einem Großteil der Fahrsituationen, in denen sich der Kritikalitätswert innerhalb eines normalen, mittleren Bereiches bewegt, wird das Sicherheitsgate jedoch die Steuerung des Fahrzeugs dem künstlichen Intelligenz-Modul überlassen.

Ein künstliches Intelligenz-Modul kann eine Einheit sein, die aus einer oder mehreren Eingaben mittels einer internen Verarbeitungskette mit typischerweise einer Gruppe freier Parameter eine oder mehrere Ausgaben berechnet. Die interne Verarbeitungskette kann in miteinander verbundene Schichten unterteilt sein, die bei einem Prozess von der Eingabe zur Ausgabe nacheinander durchlaufen werden. Viele künstliche Intelligenz-Module sind darauf ausgelegt, eine Eingabe mit hoher Dimensionalität in eine Ausgabe mit deutlich niedrigerer Dimensionalität umzuwandeln. Eine übliche Aufgabe für ein künstliches Intelligenz-Modul ist es, Bilder einer oder mehreren Kategorien von Verkehrssituationen zuzuordnen und diese zu interpretieren, je nachdem ob und an welcher Position sie bestimmte Objekt enthalten. Diese Objekte können den Straßenverlauf markieren, andere Verkehrsteilnehmer oder Hindernisse auf der Straße oder auch Verkehrszeichen oder Ampeln sein. Die Ausgabe kann dann beispielsweise für jedes der zu bestimmenden Objekte eine Wahrscheinlichkeit angeben, dass das Objekt im Eingangsbild dargestellt ist, zusammen mit der Information darüber, in welchem Bereich des Umfeldes des Fahrzeugs sich das Objekt befindet und der Entscheidung, ob und welche Reaktion des Fahrzeugs daraufhin erfolgen soll. So ein Modul wird als "intelligent" bezeichnet, weil es in der Lage ist "trainiert" zu werden. Das Modul kann trainiert werden, indem Datensätze aus Trainingsdaten verwendet werden. Ein Datensatz aus Trainingsdaten umfasst Trainingseingangsdaten und die entsprechenden Trainingsausgangsdaten. Die Trainingsausgangsdaten des Datensatzes aus Trainingsdaten sind das Ergebnis, welches von dem Modul erwartet wird, wenn ihm die Trainingseingangsdaten desselben Datensatzes aus Trainingsdaten als Eingabe übergeben werden. Die Abweichung zwischen diesem erwarteten Ergebnis und dem von dem Modul tatsächlich erzeugten Ergebnis wird aufgezeichnet und mittels einer "Verlustfunktion" bewertet. Diese Verlustfunktion wird als Rückmeldung verwendet, um die Parameter der internen Verarbeitungskette des Moduls anzupassen. Das Ergebnis dieses Trainings ist, dass mit einem gegebenen relativ kleinen Datensatz aus Trainingsdaten als "Grundwahrheit", das Modul in der Lage ist seine Aufgabe, d.h. die Klassifizierung von Bildern danach welche Objekte sie enthalten, gut für einen um viele Größenordnungen größeren Datensatz aus Eingangsdaten durchzuführen. Künstliche Intelligenz-Module können zum Beispiel neuronale Netze, genetische Algorithmen, Support Vector Machines, k-Means, Kernel-Regression oder Diskriminanzanalyse sein.

In einer Ausführungsform der Erfindung ist das künstliche Intelligenz-Modul dazu ausgeführt, mithilfe eines neuronalen Netzwerks aus den Objektdaten zumindest den ersten Steuerungsbefehl für das Fahrzeug zu erzeugen.

Ein neuronales Netz ist ein Musterbeispiel einer internen Verarbeitungskette eines künstlichen Intelligenz-Moduls. Es besteht aus einer Mehrzahl von Schichten, wobei jede Schicht eines oder mehrere Neuronen umfasst. Neuronen von benachbarten Schichten sind derart verbunden, dass die Ausgänge eines Neurons einer ersten Schicht die Eingänge von einem oder mehreren Neuronen in einer benachbarten zweiten Schicht sind. Jeder solchen Verbindung wird eine "Gewichtung" gegeben, mit der der entsprechende Eingang in eine "Aktivierungsfunktion" eingeht, die die Ausgabe des Neurons als Funktion seiner Eingänge angibt. Die Aktivierungsfunktion ist typischerweise eine nichtlineare Funktion der Eingänge. Beispielsweise kann die Aktivierungsfunktion eine "Vor-Aktivierungsfunktion" umfassen, die eine gewichtete Summe oder eine andere lineare Funktion der Eingänge ist, und eine einen Schwellwert bildende Funktion oder eine andere nichtlineare Funktion, die die finale Ausgabe des Neurons aus dem Wert der Vor-Aktivierungsfunktion erzeugt.

In dieser Ausführungsform der Erfindung können neuronale Netze verwendet werden, um die Fahrsituation basierend auf den empfangenen Objektdaten zu interpretieren und eine Entscheidung bezüglich der Steuerung des Fahrzeuges zu treffen. Dabei beruht die Entscheidungsfindung auf einem vorangegangenen Trainieren des neuronalen Netzes mit passenden Daten, die eine echte Situation simulieren und das neuronale Netz auf zukünftige echte zu treffende Entscheidungen vorbereiten sollen.

In einer Ausführungsform der Erfindung ist das Sicherheitsgate dazu ausgeführt, bei einem berechneten Kritikalitätswert oberhalb eines vordefinierten ersten Schwellwerts den zweiten Steuerungsbefehl der Rückfallvorrichtung an das Fahrzeug weiterzugeben.

Liegt der Kritikalitätswert oberhalb eines vordefinierten ersten Schwellwertes, so deutet dies auf eine kritische Fahrsituation mit möglicherweise bevorstehender Kollision hin. Das Sicherheitsgate erkennt in diesem Fall Handlungsbedarf und kann entweder direkt den ersten Steuerungsbefehl der künstlichen Intelligenz blockieren und auf die Rückfallvorrichtung mit dem deterministischen Algorithmus umschalten. Oder das Sicherheitsgate überprüft zuerst, ob die Reaktion der künstlichen Intelligenz der Situation angemessen ist, eventuell auch durch Vergleich des ersten mit dem zweiten Steuerungsbefehl. Bei angemessener Reaktion wie deutlichem Abbremsen oder passendem Lenkeingriff kann das Sicherheitsgate in dieser Ausführungsform der Erfindung die Steuerung des Fahrzeugs weiterhin der künstlichen Intelligenz überlassen. Bei ausbleibender angemessener Reaktion der künstlichen Intelligenz auf die kritische Fahrsituation wird das Sicherheitsgate jedoch die Fahrzeugsteuerung der Rückfallvorrichtung übergeben.

In einer Ausführungsform der Erfindung ist das Sicherheitsgate dazu ausgeführt, bei einem berechneten Kritikalitätswert unterhalb eines vordefinierten zweiten Schwellwertes ein Manöver zum Beenden eines automatisierten Fahrbetriebs zu bewirken.

Liegt der Kritikalitätswert unterhalb eines vordefinierten zweiten Schwellwertes, so deutet dies auf eine deutlich unterkritische Fahrsituation hin, wie zum Beispiel eine der Fahrsituation nicht angemessene zu niedrige Geschwindigkeit oder einen zu starken Bremseingriff. Das Sicherheitsgate erkennt in diesem Fall ebenso Handlungsbedarf und kann entweder direkt den ersten Steuerungsbefehl der künstlichen Intelligenz blockieren und auf die Rückfallvorrichtung mit dem deterministischen Algorithmus umschalten. Oder das Sicherheitsgate überprüft zuerst, ob die Reaktion der künstlichen Intelligenz der Situation angemessen ist, eventuell auch durch Vergleich des ersten mit dem zweiten Steuerungsbefehl. Bei einer angemessenen Reaktion wie etwa Beschleunigen oder einem schwächeren Bremseingriff kann das Sicherheitsgate die Steuerung des Fahrzeugs weiterhin der künstlichen Intelligenz überlassen. Bei ausbleibender angemessener Reaktion der künstlichen Intelligenz auf die unterkritische Fahrsituation wird das Sicherheitsgate jedoch die Fahrzeugsteuerung der Rückfallvorrichtung übergeben. Zusätzlich kann das Sicherheitsgate in dieser Ausführungsform der Erfindung auch ein Manöver zum Beenden des automatisierten Fahrbetriebes bewirken.

In einer Ausführungsform der Erfindung ist das Manöver zum Beenden des automatisierten Fahrbetriebs eine Übernahmeanforderung an einen Fahrer des Fahrzeugs oder ein Minimal-Risiko Manöver.

Um den automatisierten Fahrbetrieb zu beenden kann das Steuerungssystem an einen Fahrer des Fahrzeuges eine Aufforderung zur Übernahme der Fahrzeugsteuerung stellen. Kommt der Fahrer der Aufforderung beispielsweise nicht innerhalb einer vordefinierten Zeitspanne nach, so kann das Steuerungssystem das Fahrzeug dazu veranlassen, den automatisierten Fahrbetrieb durch ein Minimal-Risiko Manöver zu beenden, bei dem das Fahrzeug zum Beispiel an der nächsten sicheren Stelle anhält.

In einer Ausführungsform der Erfindung ist die Erfassungsvorrichtung dazu ausgeführt, das Objekt aus der Umgebung des Fahrzeugs mithilfe von Kameras, Radarsensoren, Lidarsensoren und/oder Ultraschallsensoren zu erfassen.

Zur Erfassung der Umgebung des Fahrzeugs und der entsprechenden Fahrsituation kann eine Vielzahl von verschiedenen Sensoriken und Kameras im Fahrzeug verbaut sein, die die Umgebung in dieser Ausführungsform der Erfindung beispielsweise mittels optischer, akustischer, elektromagnetischer oder weiterer Methoden abtasten beziehungsweise entsprechende Informationen aufnehmen können.

In einer Ausführungsform der Erfindung sind der erste Steuerungsbefehl, der zweite Steuerungsbefehl und der dritte Steuerungsbefehl dazu ausgeführt, zumindest die Bremse, die Lenkung und/oder den Antrieb des Fahrzeugs zu steuern.

Bremse, Lenkung und Antrieb sind als die wichtigsten Funktionen bezüglich der Steuerung eines Fahrzeugs genannt, gerade in Bezug auf Steuerungsbefehle zur Unfallvermeidung. Allerdings können natürlich in dieser Ausführungsform der Erfindung beispielsweise auch andere Funktionen des Fahrzeugs durch die Steuerungsbefehle angesteuert werden, wie zum Beispiel Blinker, Hupe, oder Scheibenwischer.

In einer Ausführungsform der Erfindung ist die Sicherheitsvorrichtung dazu ausgeführt, als Berechnungswerte eine Eigengeschwindigkeit des Fahrzeugs, eine Geschwindigkeit eines Objektfahrzeugs, eine Zeit bis zu einer möglichen Kollision, eine Zeit bis zu einem notwendigen Bremsmanöver oder eine notwendige Verzögerung zu verwenden.

Die Sicherheitsvorrichtung greift zur Berechnung des Kritikalitätswertes in dieser Ausführungsform der Erfindung auf einfach aus den Objektdaten zu erhaltende Berechnungswerte zurück. Diese Berechnungswerte müssen beispielsweise nicht auf einer umfassenden Analyse der Fahrsituation mittels Bildgebender Verfahren basieren, sondern können vorteilhafterweise einfach aus den Daten von zum Beispiel Geschwindigkeits- und Abstandssensoren gewonnen werden.

Ein weiterer Aspekt der Erfindung umfasst ein Verfahren zur Steuerung einer Bremse, einer Lenkung und/oder eines Antriebs eines autonomen oder automatisierten Fahrzeugs, wobei das Verfahren folgende Schritte aufweist: Ein erster Schritt umfasst das Erfassen eines Objekts aus einer Umgebung des Fahrzeugs und Bereitstellen von entsprechenden Objektdaten. Ein zweiter Schritt umfasst das Erzeugen zumindest eines ersten Steuerungsbefehls für das Fahrzeug aus den Objektdaten mithilfe eines künstlichen Intelligenz-Moduls. Ein dritter Schritt umfasst das Erzeugen zumindest eines zweiten Steuerungsbefehls für das Fahrzeug aus den Objektdaten mithilfe einer deterministischen Berechnungsvorschrift. Ein vierter Schritt umfasst das Ermitteln von Berechnungswerten basierend auf den Objektdaten und Berechnen eines darauf basierenden Kritikalitätswerts. Und ein fünfter Schritt umfasst das Empfangen des ersten Steuerungsbefehls, des zweiten Steuerungsbefehls und des Kritikalitätswerts und Versenden eines auf dem Kritikalitätswert basierenden dritten Steuerungsbefehls an das Fahrzeug, wobei der dritte Steuerungsbefehl entweder der erste Steuerungsbefehl des künstlichen Intelligenz-Moduls oder der zweite Steuerungsbefehl der deterministischen Berechnungsvorschrift ist beziehungsweise diesem entspricht.

Die Steuerung des autonomen oder automatisierten Fahrzeugs erfolgt also nach einem Verfahren, das sich in Schritte gliedern lässt. Auf das Erfassen von Objektdaten aus der Umgebung als erster Schritt erfolgen, vorzugsweise in zeitgleicher Ausführung, die Schritte zwei, drei und vier. Hier werden jeweils die Objektdaten analysiert und auf verschiedene Weise weiterverarbeitet. Im zweiten Schritt erfolgt das Erzeugen eines ersten Steuerungsbefehls mittels einer künstlichen Intelligenz. Im dritten Schritt erfolgt das Erzeugen eines zweiten Steuerungsbefehls mithilfe einer deterministischen Berechnungsvorschrift. Und im vierten Schritt wird ein Kritikalitätswert der Fahrsituation berechnet. Im fünften Schritt, der auf die vorzugsweise gleichzeitige Ausführung der Schritte zwei, drei und vier erfolgt, wird ein dritter Steuerungsbefehl erzeugt. In Abhängigkeit des Kritikalitätswertes, und vorteilhafterweise auch in Abhängigkeit von dem ersten Steuerungsbefehl und einer angemessenen Reaktion des ersten Steuerungsbefehls auf die Fahrsituation, besteht der dritte Steuerungsbefehl entweder aus dem ersten Steuerungsbefehl oder dem zweiten Steuerungsbefehl beziehungsweise entspricht diesem. Es ist jedoch zu beachten, dass die hier genannte Abfolge der Schritte auch anders sein kann. Insbesondere ist sie nicht einschränkend zu verstehen.

In einer Ausführungsform der Erfindung wird bei einem berechneten Kritikalitätswert oberhalb eines vordefinierten ersten Schwellwerts der mithilfe der deterministischen Berechnungsvorschrift ermittelte zweite Steuerungsbefehl weitergegeben.

Bei einem Überschreiten eines vordefinierten ersten Schwellwerts durch den Kritikalitätswert kann in dieser Ausführungsform der Erfindung entweder direkt der zweite Steuerungsbefehl verwendet und in Form des dritten Steuerungsbefehls weitergegeben werden, um beispielsweise einen angemessenen Bremseingriff zu bewirken, oder um ein rekonstruierbares Steuerungsverhalten zu erlangen. Oder es wird erst, eventuell auch im Vergleich des ersten mit dem zweiten Steuerungsbefehl, der erste Steuerungsbefehl auf Plausibilität überprüft. In diesem Fall wird nur bei einem nicht plausiblen Verhalten des ersten Steuerungsbefehls auf den zweiten Steuerungsbefehl umgeschaltet. Bei einem der Situation angemessenen ersten Steuerungsbefehl wird dieser verwendet, um in Form des dritten Steuerungsbefehls das Fahrzeug zu steuern.

Ein weiterer Aspekt der Erfindung umfasst ein Computerprogramm, das, wenn es auf einem Prozessor ausgeführt wird, ein Steuerungssystem nach einem voranstehend beschriebenen Ausführungsformen veranlasst ein Verfahren nach einem der voranstehend beschriebenen Ausführungsformen durchzuführen.

Weitere Ausführungsbeispiele der Erfindung werden im Folgenden unter Bezugnahme auf folgende Zeichnungen erklärt:

### Kurze Beschreibung der Figuren

Fig. 1 zeigt einen schematischen Aufbau eines erfindungsgemäßen Steuerungssystems zur Steuerung eines autonomen oder automatisierten Fahrzeugs.
Fig. 2 zeigt ein Blockdiagramm eines erfindungsgemäßen Verfahrens zur Steuerung eines autonomen oder automatisierten Fahrzeugs.

### Detaillierte Beschreibung der Figuren

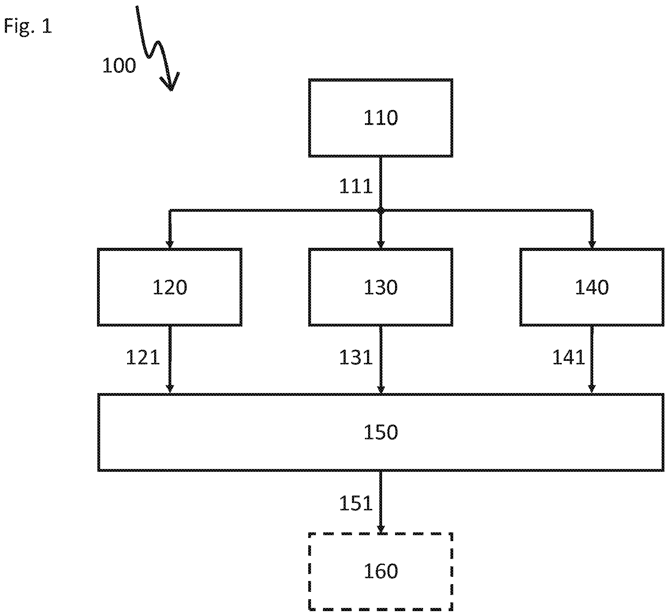

Fig. 1 zeigt einen schematischen Aufbau eines erfindungsgemäßen Steuerungssystems 100 zur Steuerung eines autonomen oder automatisierten Fahrzeugs 160. Eine Erfassungsvorrichtung 110 ist ausgeführt, um Objekte aus der Umgebung des Fahrzeugs 160 zu erfassen und entsprechende Objektdaten 111 bereitzustellen. Diese Objektdaten 111 werden einem künstlichen Intelligenz-Modul 120, einer Rückfallvorrichtung 130 und einer Sicherheitsvorrichtung 140 zur Verfügung gestellt. Das künstliche Intelligenz-Modul 120 erzeugt aus den Objektdaten 111 zumindest einen ersten Steuerungsbefehl 121 zur Steuerung des Fahrzeugs 160. Die Rückfallvorrichtung 130 erzeugt aus den Objektdaten 111 mithilfe einer deterministischem Berechnungsvorschrift zumindest einen zweiten Steuerungsbefehl 131 zur Steuerung des Fahrzeugs 160. Und die Sicherheitsvorrichtung 140 ermittelt aus den Objektdaten 111 Berechnungswerte und berechnet daraus einen Kritikalitätswert 141. Dieser erste Steuerungsbefehle 121, der zweite Steuerungsbefehl 131 und der Kritikalitätswert 141 werden an das Sicherheitsgate 150 weitergegeben. Dieses ist ausgeführt, um einen dritten Steuerungsbefehl 151 basierend auf dem Kritikalitätswert 141 zu erzeugen, wobei der dritte Steuerungsbefehl 151 entweder der erste Steuerungsbefehl 121 des künstlichen Intelligenz-Moduls 120 oder der zweite Steuerungsbefehl 131 der Rückfallvorrichtung 130 ist beziehungsweise diesem entspricht oder auf ihm basiert. Dabei dient die Überwachung des ersten Steuerungsbefehls 121 des künstlichen Intelligenz-Moduls 120 mit der Möglichkeit des Rückgriffs auf den zweiten Steuerungsbefehl 131 der deterministisch programmierten Rückfallvorrichtung 130 der Sicherstellung einer angemessenen Reaktion des Steuerungssystems 100 des Fahrzeugs 160 auf kritische Fahrsituationen, beziehungsweise im Fall eines Unfalls der Möglichkeit einer Rekonstruktion des Unfallhergangs sowie einer Klärung der Schuldfrage.

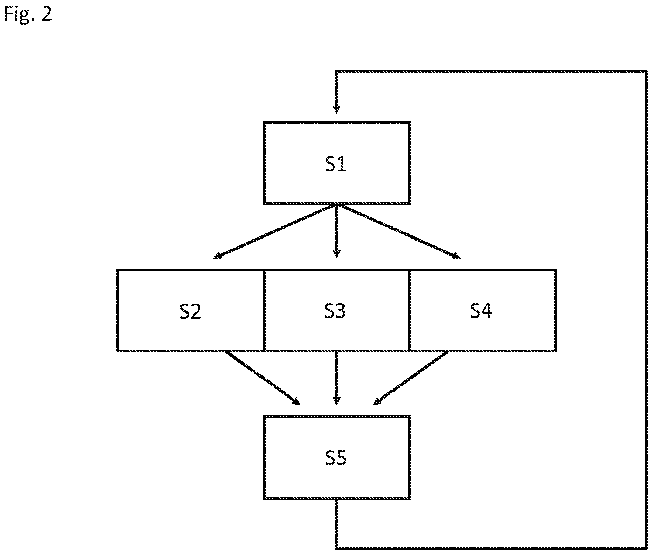

Fig. 2 zeigt ein Blockdiagramm eines erfindungsgemäßen Verfahrens zur Steuerung eines autonomen oder automatisierten Fahrzeugs 160. Einem ersten Schritt S1 des Erfassens eines Objekts aus einer Umgebung des Fahrzeugs 160 und des Bereitstellens von entsprechenden Objektdaten 111 folgen die Schritte S2, S3 und S4 vorzugsweise in zeitgleicher Ausführung. Im zweiten Schritt S2 erfolgt das Erzeugen zumindest eines ersten Steuerungsbefehls 121 für das Fahrzeug 160 mithilfe eines künstlichen Intelligenz-Moduls 120. Im dritten Schritt S3 erfolgt das Erzeugen zumindest eines zweiten Steuerungsbefehls 131 für das Fahrzeug 160 mithilfe einer deterministischen Berechnungsvorschrift. Im vierten Schritt S4 erfolgt Ermitteln von Berechnungswerten basierend auf den Objektdaten 111 und Berechnen eines darauf basierenden Kritikalitätswerts 141. Im fünften Schritt S5, der auf die vorzugsweise gleichzeitige Ausführung der Schritte S2, S3 und S4 erfolgt, erfolgt das Empfangen des ersten Steuerungsbefehls 121, des zweiten Steuerungsbefehls 131 und des Kritikalitätswerts 141 und Versenden eines auf dem Kritikalitätswert 141 basierenden dritten Steuerungsbefehls 151 an das Fahrzeug 160, wobei der dritte Steuerungsbefehl 151 entweder der erste Steuerungsbefehl 121 des künstlichen Intelligenz-Moduls 120 oder der zweite Steuerungsbefehl 131 der deterministischen Berechnungsvorschrift ist beziehungsweise diesem entspricht.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Steuerungssystem
- 110: Erfassungsvorrichtung
- 111: Objektdaten
- 120: künstliches Intelligenz-Modul
- 121: erster Steuerungsbefehl
- 130: Rückfallvorrichtung
- 131: zweiter Steuerungsbefehl
- 140: Sicherheitsvorrichtung
- 141: Kritikalitätswert
- 150: Sicherheitsgate
- 151: dritter Steuerungsbefehl
- 160: Fahrzeug

## Patentansprüche

1. Steuerungssystem (100) zur Steuerung einer Bremse, einer Lenkung und/oder eines Antriebs eines autonomen oder automatisierten Fahrzeugs (160), das Steuerungssystem (100) aufweisend:
eine Erfassungsvorrichtung (110), die dazu ausgeführt ist, ein Objekt aus einer Umgebung des Fahrzeugs (160) zu erfassen und entsprechende Objektdaten (111) bereitzustellen;
ein künstliches Intelligenz-Modul (120), das dazu ausgeführt ist, aus den Objektdaten (111) zumindest einen ersten Steuerungsbefehl (121) für das Fahrzeug (160) zu erzeugen;
eine Rückfallvorrichtung (130), die dazu ausgeführt ist, aus den Objektdaten (111) mithilfe einer deterministischen Berechnungsvorschrift zumindest einen zweiten Steuerungsbefehl (131) für das Fahrzeug (160) zu erzeugen;
eine Sicherheitsvorrichtung (140), die dazu ausgeführt ist, basierend auf den Objektdaten (111) Berechnungswerte zu ermitteln und daraus einen Kritikalitätswert (141) zu berechnen; **dadurch gekennzeichnet, dass**
Z die Sicherheitsvorrichtung (140) dazu ausgeführt ist, die Berechnungswerte aus den Objektdaten (111) zu ermitteln, und
das Steuerungssystem (100) zudem ein Sicherheitsgate (150) umfasst, welches dazu ausgeführt ist, den ersten Steuerungsbefehl (121) des künstlichen Intelligenz-Moduls (120), den zweiten Steuerungsbefehl (131) der Rückfallvorrichtung (130) und den Kritikalitätswert (141) der Sicherheitsvorrichtung (140) zu empfangen,
wobei das Sicherheitsgate (150) dazu ausgeführt ist, basierend auf dem Kritikalitätswert (141), einen dritten Steuerungsbefehl (151) an das Fahrzeug (160) zu versenden, wobei der dritte Steuerungsbefehl (151) entweder der erste Steuerungsbefehl (121) des künstlichen Intelligenz-Moduls (120) oder der zweite Steuerungsbefehl (131) der Rückfallvorrichtung (130) ist beziehungsweise diesem entspricht.

2. Steuerungssystem (100) gemäß Anspruch 1, wobei das künstliche Intelligenz-Modul (120) dazu ausgeführt ist, mithilfe eines neuronalen Netzwerks aus den Objektdaten (111) zumindest den ersten Steuerungsbefehl (121) für das Fahrzeug (160) zu erzeugen.

3. Steuerungssystem (100) gemäß einem der Ansprüche 1 oder 2, wobei das Sicherheitsgate (150) dazu ausgeführt ist, bei einem berechneten Kritikalitätswert (141) oberhalb eines vordefinierten ersten Schwellwerts den zweiten Steuerungsbefehl (131) der Rückfallvorrichtung (130) an das Fahrzeug (160) weiterzugeben.

4. Steuerungssystem (100) gemäß einem der vorherigen Ansprüche, wobei das Sicherheitsgate (150) dazu ausgeführt ist, bei einem berechneten Kritikalitätswert (141) unterhalb eines vordefinierten zweiten Schwellwertes ein Manöver zum Beenden eines automatisierten Fahrbetriebes zu bewirken.

5. Steuerungssystem (100) gemäß Anspruch 4, wobei das Manöver zum Beenden des automatisierten Fahrbetriebs eine Übernahmeanforderung an einen Fahrer des Fahrzeugs (160) oder ein Minimal-Risiko Manöver ist.

6. Steuerungssystem (100) gemäß einem der vorherigen Ansprüche, wobei die Erfassungsvorrichtung (110) dazu ausgeführt ist, das Objekt aus der Umgebung des Fahrzeugs (160) mithilfe von Kameras, Radarsensoren, Lidarsensoren und/oder Ultraschallsensoren zu erfassen.

7. Steuerungssystem (100) gemäß einem der vorherigen Ansprüche, wobei der erste Steuerungsbefehl (121), der zweite Steuerungsbefehl (131) und der dritte Steuerungsbefehl (151) dazu ausgeführt sind, zumindest die Bremse, die Lenkung und/oder den Antrieb des Fahrzeugs (160) zu steuern.

8. Steuerungssystem (100) gemäß einem der vorherigen Ansprüche, wobei die Sicherheitsvorrichtung (140) dazu ausgeführt ist, als Berechnungswerte eine Eigengeschwindigkeit des Fahrzeugs (160), eine Geschwindigkeit eines Objektfahrzeugs, eine Zeit bis zu einer möglichen Kollision, eine Zeit bis zu einem notwendigen Bremsmanöver oder eine notwendige Verzögerung zu verwenden.

9. Verfahren zur Steuerung einer Bremse, einer Lenkung und/oder eines Antriebs eines autonomen oder automatisierten Fahrzeugs (160), das Verfahren aufweisend die Schritte:
- Erfassen eines Objekts aus einer Umgebung des Fahrzeugs (160) und Bereitstellen von entsprechenden Objektdaten (111) (S1),
- Erzeugen zumindest eines ersten Steuerungsbefehls (121) für das Fahrzeug (160) aus den Objektdaten (111) mithilfe eines künstlichen Intelligenz-Moduls (120) (S2),
- Erzeugen zumindest eines zweiten Steuerungsbefehls (131) für das Fahrzeug (160) aus den Objektdaten (111) mithilfe einer deterministischen Berechnungsvorschrift (S3),
- Ermitteln von Berechnungswerten aus den Objektdaten (111) und Berechnen eines darauf basierenden Kritikalitätswerts (141) (S4), und
- Empfangen des ersten Steuerungsbefehls (121), des zweiten Steuerungsbefehls (131) und des Kritikalitätswerts (141) und Versenden eines auf dem Kritikalitätswert (141) basierenden dritten Steuerungsbefehls (151) an das Fahrzeug (160) (S5), wobei der dritte Steuerungsbefehl (151) entweder der erste Steuerungsbefehl (121) des künstlichen Intelligenz-Moduls (120) oder der zweite Steuerungsbefehl (131) der deterministischen Berechnungsvorschrift ist beziehungsweise diesem entspricht.

10. Verfahren gemäß Anspruch 9, wobei bei einem berechneten Kritikalitätswert (141) oberhalb eines vordefinierten ersten Schwellwerts der mithilfe der deterministischen Berechnungsvorschrift ermittelte zweite Steuerungsbefehl (131) weitergegeben wird.

11. Computerprogramm, das, wenn es auf einem Prozessor ausgeführt wird, ein Steuerungssystem (100) nach einem der Ansprüche 1 bis 8 veranlasst ein Verfahren nach einem der Ansprüche 9 oder 10 durchzuführen.

## Claims

1. Control system (100) for controlling a brake, a steering system and/or a drive of an autonomous or automated vehicle (160), the control system (100) having:
a detection apparatus (110) which is designed to detect an object from an environment of the vehicle (160) and to provide corresponding object data (111);
an artificial intelligence module (120) which is designed to generate at least one first control command (121) for the vehicle (160) from the object data (111);
a fallback apparatus (130) which is designed to generate at least one second control command (131) for the vehicle (160) from the object data (111) with the aid of a deterministic calculation rule;
a safety apparatus (140) which is designed to determine calculation values on the basis of the object data (111) and to calculate a criticality value (141) therefrom;
**characterized in that**
the safety apparatus (140) is configured to determine the calculation values from the object data (111), and the control system (100) also comprises a safety gate (150) which is configured to receive the first control command (121) from the artificial intelligence module (120), the second control command (131) from the fallback apparatus (130) and the criticality value (141) from the safety apparatus (140),
wherein the safety gate (150) is configured to transmit a third control command (151) to the vehicle (160) on the basis of the criticality value (141), wherein the third control command (151) either is or corresponds to the first control command (121) from the artificial intelligence module (120) or is or corresponds to the second control command (131) from the fallback apparatus (130).

2. Control system (100) according to Claim 1, wherein the artificial intelligence module (120) is configured to generate at least the first control command (121) for the vehicle (160) from the object data (111) with the aid of a neural network.

3. Control system (100) according to either of Claims 1 and 2, wherein the safety gate (150) is configured to forward the second control command (131) from the fallback apparatus (130) to the vehicle (160) if a calculated criticality value (141) is above a predefined first threshold value.

4. Control system (100) according to one of the preceding claims, wherein the safety gate (150) is configured to effect a manoeuvre for ending an automated driving mode if a calculated criticality value (141) is below a predefined second threshold value.

5. Control system (100) according to Claim 4, wherein the manoeuvre for ending the automated driving mode is a takeover request to a driver of the vehicle (160) or a minimal risk manoeuvre.

6. Control system (100) according to one of the preceding claims, wherein the detection apparatus (110) is configured to detect the object from the environment of the vehicle (160) with the aid of cameras, radar sensors, lidar sensors and/or ultrasonic sensors.

7. Control system (100) according to one of the preceding claims, wherein the first control command (121), the second control command (131) and the third control command (151) are configured to control at least the brake, the steering system and/or the drive of the vehicle (160).

8. Control system (100) according to one of the preceding claims, wherein the safety apparatus (140) is configured to use, as calculation values, the vehicle's (160) own speed, a speed of an object vehicle, a time to a possible collision, a time to a necessary braking manoeuvre or a necessary deceleration.

9. Method for controlling a brake, a steering system and/or a drive of an autonomous or automated vehicle (160), the method having the steps of:
- detecting an object from an environment of the vehicle (160) and providing corresponding object data (111) (S1),
- generating at least one first control command (121) for the vehicle (160) from the object data (111) with the aid of an artificial intelligence module (120) (S2),
- generating at least one second control command (131) for the vehicle (160) from the object data (111) with the aid of a deterministic calculation rule (S3),
- determining calculation values from the object data (111) and calculating a criticality value (141) based thereon (S4), and
- receiving the first control command (121), the second control command (131) and the criticality value (141) and transmitting a third control command (151) based on the criticality value (141) to the vehicle (160) (S5), wherein the third control command (151) either is or corresponds to the first control command (121) from the artificial intelligence module (120) or is or corresponds to the second control command (131) from the deterministic calculation rule.

10. Method according to Claim 9, wherein the second control command (131) determined with the aid of the deterministic calculation rule is forwarded if a calculated criticality value (141) is above a predefined first threshold value.

11. Computer program which, when executed on a processor, causes a control system (100) according to one of Claims 1 to 8 to carry out a method according to either of Claims 9 and 10.

## Revendications

1. Système de commande (100) destiné à commander un frein, une direction et/ou un mécanisme de propulsion d'un véhicule (160) autonome ou automatisé, le système de commande (100) possédant :
un dispositif de détection (110), lequel est conçu pour détecter un objet à partir d'un environnement du véhicule (160) et mettre à disposition des données d'objet (111) correspondantes ;
un module d'intelligence artificielle (120), lequel est conçu pour générer, à partir des données d'objet (111), au moins une première instruction de commande (121) pour le véhicule (160) ;
un dispositif de reprise (130), lequel est conçu pour générer, à partir des données d'objet (111), au moins une deuxième instruction de commande (131) pour le véhicule (160) à l'aide d'une règle de calcul déterministe ;
un dispositif de sécurité (140), lequel est conçu pour, en se basant sur les données d'objet (111), déterminer des valeurs de calcul et calculer à partir de celles-ci une valeur de criticité (141) ;
**caractérisé en ce que**
le dispositif de sécurité (140) est conçu pour déterminer les valeurs de calcul à partir des données d'objet (111) et
le système de commande (100) comporte en plus une porte de sécurité (150),
laquelle est conçue pour recevoir la première instruction de commande (121) du module d'intelligence artificielle (120), la deuxième instruction de commande (131) du dispositif de reprise (130) et la valeur de criticité (141) du dispositif de sécurité (140),
la porte de sécurité (150) étant conçue pour, en se basant sur la valeur de criticité (141), envoyer une troisième instruction de commande (151) au véhicule (160), la troisième instruction de commande (151) étant soit la première instruction de commande (121) du module d'intelligence artificielle (120), soit la deuxième instruction de commande (131) du dispositif de reprise (130) ou correspondant à celles-ci.

2. Système de commande (100) selon la revendication 1, le module d'intelligence artificielle (120) étant conçu pour, à l'aide d'un réseau neuronal, générer à partir des données d'objet (111) au moins la première instruction de commande (121) pour le véhicule (160).

3. Système de commande (100) selon l'une des revendications 1 ou 2, la porte de sécurité (150) étant conçue pour, dans le cas d'une valeur de criticité (141) calculée supérieure à une première valeur de seuil prédéfinie, retransmettre au véhicule (160) la deuxième instruction de commande (131) du dispositif de reprise (130).

4. Système de commande (100) selon l'une des revendications précédentes, la porte de sécurité (150) étant conçue pour, dans le cas d'une valeur de criticité (141) calculée inférieure à une deuxième valeur de seuil prédéfinie, provoquer une manoeuvre pour mettre fin à un régime de conduite automatisée.

5. Système de commande (100) selon la revendication 4, la manoeuvre pour mettre fin au régime de conduite automatisée étant une demande de prise en charge adressée à un conducteur du véhicule (160) ou une manoeuvre à risque minimal.

6. Système de commande (100) selon l'une des revendications précédentes, le dispositif de détection (110) étant conçu pour détecter l'objet à partir de l'environnement du véhicule (160) à l'aide de caméras, de capteurs radar, de capteurs lidar et/ou de capteurs à ultrasons.

7. Système de commande (100) selon l'une des revendications précédentes, la première instruction de commande (121), la deuxième instruction de commande (131) et la troisième instruction de commande (151) étant conçues pour commander au moins le frein, la direction et/ou le mécanisme de propulsion du véhicule (160).

8. Système de commande (100) selon l'une des revendications précédentes, le dispositif de sécurité (140) étant conçu pour utiliser, en tant que valeur de calcul, une vitesse propre du véhicule (160), une vitesse d'un véhicule objet, une durée jusqu'à une collision possible, une durée jusqu'à une manoeuvre de freinage nécessaire ou un ralentissement nécessaire.

9. Procédé pour commander un frein, une direction et/ou un mécanisme de propulsion d'un véhicule (160) autonome ou automatisé, le procédé comprenant les étapes suivantes :
- détection d'un objet à partir d'un environnement du véhicule (160) et mise à disposition de données d'objet (111) correspondantes (S1),
- génération d'au moins une première instruction de commande (121) pour le véhicule (160) à partir des données d'objet (111) à l'aide d'un module d'intelligence artificielle (120) (S2),
- génération d'au moins une deuxième instruction de commande (131) pour le véhicule (160) à partir des données d'objet (111) à l'aide d'une règle de calcul déterministe (S3),
- détermination de valeurs de calcul à partir des données d'objet (111) et calcul d'une valeur de criticité (141) qui se base sur celles-ci (S4), et
- réception de la première instruction de commande (121), de la deuxième instruction de commande (131) et de la valeur de criticité (141) et envoi au véhicule (160) d'une troisième instruction de commande (151) basée sur la valeur de criticité (141) (S5), la troisième instruction de commande (151) étant soit la première instruction de commande (121) du module d'intelligence artificielle (120), soit la deuxième instruction de commande (131) de la règle de calcul déterministe ou correspondant à celles-ci.

10. Procédé selon la revendication 9, la deuxième instruction de commande (131) déterminée à l'aide de la règle de calcul déterministe étant retransmise dans le cas d'une valeur de criticité (141) calculée supérieure à une première valeur de seuil prédéfinie.

11. Programme informatique qui, lorsqu'il est exécuté sur un processeur, amène un système de commande (100) selon l'une des revendications 1 à 8 à mettre en oeuvre un procédé selon l'une des revendications 9 ou 10.
